(19) Europäisches Patentamt / European Patent Office / Office européen des brevets

(11) EP 4 726 804 A1

(12) **EUROPEAN PATENT APPLICATION**
published in accordance with Art. 153(4) EPC

(43) Date of publication:
15.04.2026 Bulletin 2026/16

(21) Application number: 24859775.9

(22) Date of filing: 27.08.2024

(51) International Patent Classification (IPC):
$H01M\ 4/14^{(2006.01)}$    $H01M\ 4/62^{(2006.01)}$
$H01M\ 10/06^{(2006.01)}$

(52) Cooperative Patent Classification (CPC):
H01M 4/14; H01M 4/62; H01M 10/06; Y02E 60/10

(86) International application number:
PCT/JP2024/030517

(87) International publication number:
WO 2025/047743 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023141651

(71) Applicant: GS Yuasa International Ltd.
Kisshoin, Minami-ku,
Kyoto-shi, Kyoto 601-8520 (JP)

(72) Inventor: KUMAGAI, Yusuke
Kyoto-shi, Kyoto 601-8520 (JP)

(74) Representative: Isarpatent
Patent- und Rechtsanwälte PartG mbB
Friedrichstraße 31
80801 München (DE)

(54) **LEAD-ACID BATTERY**

(57) A lead-acid battery includes an element and an electrolyte solution. The element includes a positive electrode plate containing a positive electrode material, a negative electrode plate containing a negative electrode material, and a separator interposed between the positive electrode plate and the negative electrode plate. The negative electrode material contains a first carbonaceous material having a particle size of less than 32 $\mu$m and a fatty acid having 8 or more and 30 or less carbon atoms. A content Cc of the first carbonaceous material in the negative electrode material is 0.4 mass% or more. When the content of the fatty acid on a mass basis in the negative electrode material is represented by Cf (ppm), the specific surface area of the negative electrode material is represented by Sn ($m^2$/g), and the DBP oil absorption of the first carbonaceous material is represented by Y, at least one of the condition (i) or the condition (ii) is satisfied. (i) The ratio Cf/Y is 0.1 ppm $\cdot mL^{-1}$ $\cdot$100 g or more. (ii) The ratio Cf/Sn is 20 ppm $\cdot m^{-2}$ $\cdot$g or more.

Fig. 1

**Description**

TECHNICAL FIELD

The present invention relates to a lead-acid battery.

BACKGROUND ART

Lead-acid batteries are in use for various applications, including automotive and industrial applications. A lead-acid battery includes a negative electrode plate, a positive electrode plate, and an electrolyte solution. The negative electrode plate includes a current collector and a negative electrode material. The negative electrode material includes a carbonaceous material, an organic expander, and the like. An additive may be added to constituent members of the lead-acid battery from the viewpoint of imparting various functions.

Patent Document 1 proposes a flooded-type lead-acid battery including a negative active material, a positive active material mainly containing lead dioxide, and a flowable electrolyte solution containing sulfuric acid, and the negative active material contains spongy lead, carbon, a bisphenol-based condensate, and alginic acid or its alkali metal salt.

Patent Document 2 proposes a flooded-type lead-acid battery manufactured with a so-called container formation method in which a battery is prepared using unformed positive and negative electrode plates, then the battery is filled with a predetermined diluted sulfuric acid, and the battery is energized to form the element in the container, and in the flooded-type lead-acid battery, a negative active material is used to which a fatty acid is added.

Patent Document 3 proposes a dry charged lead-acid battery including a dry charged negative electrode plate obtained by sufficiently washing a negative electrode plate in a charge state with water, then immersing the negative electrode plate in a 0.5 to 3% emulsion obtained by adding water to an alcohol solution of a diterpene acid, and then dry-charging the negative electrode plate.

PRIOR ART DOCUMENTS

PATENT DOCUMENTS

Patent Document 1: WO 2014/050012 A
Patent Document 2: JP-A-10-302785
Patent Document 3: JP-A-50-076535

SUMMARY OF THE INVENTION

PROBLEMS TO BE SOLVED BY THE INVENTION

The lead-acid battery is sometimes used in a poor charged state called a partial state of charge (PSOC). Examples of an application in which charge and discharge are controlled in a PSOC include idling stop (also referred to as start-stop or idle reduction) applications, charge control applications, and vehicle auxiliary applications. If the lead-acid battery is repeatedly charged and discharged in a PSOC, lead sulfate is likely to accumulate, so that the life performance is likely to deteriorate. The accumulation of lead sulfate is effectively reduced by blending a carbonaceous material in the negative electrode material. However, when the amount of the carbonaceous material blended in the negative electrode material becomes such that an effect of suppressing the accumulation of lead sulfate is exhibited, the carbonaceous material remarkably flows out to the electrolyte solution. If the carbonaceous material flows out to the electrolyte solution, the electrolyte solution becomes turbid to decrease the visibility for an electrolyte solution level sensor. In the present specification, idling stop may be simply referred to as IS.

MEANS FOR SOLVING THE PROBLEMS

A first aspect of the present disclosure is a lead-acid battery including:

an element; and
an electrolyte solution,
wherein the element includes a positive electrode plate containing a positive electrode material, a negative electrode plate containing a negative electrode material, and a separator interposed between the positive electrode plate and the negative electrode plate,
the negative electrode material contains a first carbonaceous material having a particle size of less than 32 $\mu$m and a fatty acid having 8 or more and 30 or less carbon atoms,
a content Cc1 of the first carbonaceous material in the negative electrode material is 0.4 mass% or more, and
a ratio Cf/Sn of a content Cf to a specific surface area Sn is 20 ppm $\cdot$m$^{-2}$ $\cdot$g or more where Cf (ppm) represents a content of the fatty acid on a mass basis in the negative electrode material and Sn (m$^2$/g) represents a specific surface area of the negative electrode material.

A second aspect of the present invention is a lead-acid battery including:

an element; and
an electrolyte solution,
wherein the element includes a positive electrode plate containing a positive electrode material, a negative electrode plate containing a negative electrode material, and a separator interposed between the positive electrode plate and the negative electrode plate,
the negative electrode material contains a first carbonaceous material having a particle size of less than 32 $\mu$m and a fatty acid having 8 or more and 30 or less carbon atoms,
a content Cc1 of the first carbonaceous material in the negative electrode material is 0.4 mass% or more, and
a ratio Cf/Y of a content Cf to a DBP oil absorption Y is 0.1 ppm $\cdot$mL$^{-1}$ $\cdot$100 g or more where Cf (ppm) represents a content of the fatty acid on a mass basis in the negative electrode material and Y represents a dibutyl phthalate (DBP) oil absorption (DBP oil absorption) of the first carbonaceous material.

## ADVANTAGES OF THE INVENTION

In the lead-acid battery, outflow of the carbonaceous material from the negative electrode plate can be suppressed.

## BRIEF DESCRIPTION OF THE DRAWING

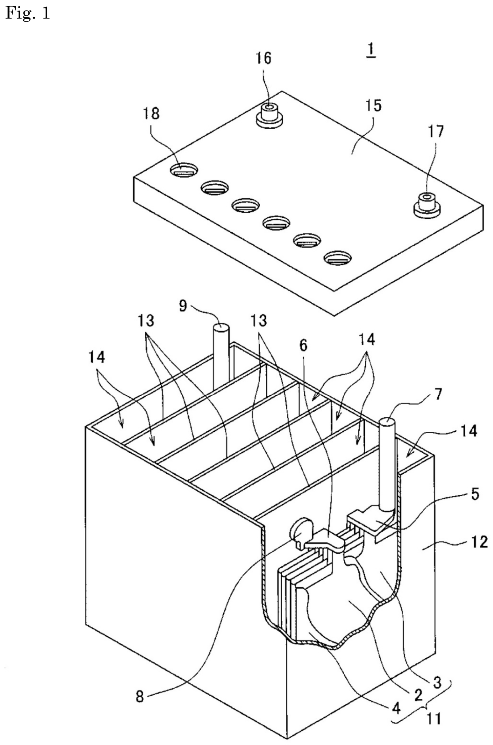

Fig. 1 is a partially cutaway exploded perspective view showing an appearance and an internal structure of a lead-acid battery according to one embodiment of the present invention.

## MODE FOR CARRYING OUT THE INVENTION

While novel features of the present invention are set forth in the appended claims, the present invention will be better understood in terms of both construction and content by the following detailed description of the drawing, taken in conjunction with other objects and features of the present invention.
In a lead-acid battery including a negative electrode material containing a carbonaceous material having a particle size of less than 32 $\mu$m (sometimes referred to as a first carbonaceous material), the conductivity of the negative electrode material is improved to enhance the charge acceptability. Even in the case of using the lead-acid battery in a PSOC, lead sulfate is easily reduced to lead during charge, so that accumulation of lead sulfate is reduced, and deterioration of the life performance can be suppressed. In a case where the content of the first carbonaceous material in the negative electrode material is high, a high charge acceptability is easily obtained. However, in a case where the content of the first carbonaceous material is high, the first carbonaceous material remarkably flows out from a negative electrode plate to an electrolyte solution. In particular in the case of forming the negative electrode plate in a container, gassing is likely to occur during formation, and the first carbonaceous material remarkably flows out in the vicinity of the surface of the negative electrode plate. In a case where the content of the first carbonaceous material in the negative electrode material is high, the amount of the first carbonaceous material that flows out from the vicinity of the surface is also large. If the outflow of the first carbonaceous material becomes remarkable, the turbidity of the electrolyte solution also becomes remarkable. If a large amount of the first carbonaceous material flows out into the electrolyte solution, the first carbonaceous material adheres to the inner wall of the container, an electrolyte solution level sensor, and the like. As a result, the visibility of the electrolyte solution level sensor deteriorates.
In view of the above, [1] a lead-acid battery according to a first aspect of the present invention includes an element and an electrolyte solution. The element includes a positive electrode plate containing a positive electrode material, a negative electrode plate containing a negative electrode material, and a separator interposed between the positive electrode plate and the negative electrode plate. The negative electrode material contains a first carbonaceous material having a particle size of less than 32 $\mu$m and a fatty acid having 8 or more and 30 or less carbon atoms. A content Cc1 of the first carbonaceous material in the negative electrode material is 0.4 mass% or more. Hereinafter, a fatty acid having 8 or more and 30 or less carbon atoms is referred to as a first fatty acid.

In the lead-acid battery according to the first aspect, a ratio Cf/Sn of a content Cf to a specific surface area Sn is 20 ppm $\cdot$m$^{-2}$ $\cdot$g or more where Cf (unit: ppm) represents the content of the first fatty acid on a mass basis in the negative electrode material and Sn (unit: m$^2$/g) represents the specific surface area of the negative electrode material.

[2] A lead-acid battery according to a second aspect of the present invention includes an element and an electrolyte solution. The element includes a positive electrode plate containing a positive electrode material, a negative electrode plate containing a negative electrode material, and a separator interposed between the positive electrode plate and the negative electrode plate. The negative electrode material contains a first carbonaceous material having a particle size of less than 32 $\mu$m and a first fatty acid. The negative electrode material has a content Cc1 of the first carbonaceous material of 0.4 mass% or more.

In the lead-acid battery according to the second aspect, a ratio Cf/Y of a content Cf to a DBP oil absorption is 0.1 ppm $\cdot$mL$^{-1}$ $\cdot$100 g or more where Cf (unit: ppm) represents the content of the first fatty acid on a mass basis in the negative electrode material and Y represents the DBP oil absorption Y (unit: mL/100 g) of the first carbonaceous material.

In a case where the content Cc1 of the first carbonaceous material in the negative electrode material is 0.4 mass% or more, outflow of the first carbonaceous material to the electrolyte solution is likely to become apparent, and the turbidity of the electrolyte solution is likely to become remarkable. Even in such a case, in the first aspect and the second aspect of the present invention, if the negative electrode material contains the first fatty acid so as to satisfy at least one of Cf/Sn $\geq$ 20 ppm $\cdot$m$^{-2}$ $\cdot$g or Cf/Y $\geq$ 0.1 ppm $\cdot$mL$^{-1}$ $\cdot$100 g, outflow of the carbonaceous material to the electrolyte solution can be reduced. The turbidity of the electrolyte solution can be reduced, so that deterioration of the visibility for the electrolyte solution level sensor can be suppressed.

A fatty acid has a structure having one carboxy group in a hydrocarbon. The first fatty acid has 8 to 30 carbon atoms, and therefore it is considered that the hydrocarbon moiety facilitates selective adherence of the first fatty acid to particles of the first carbonaceous material (hereinafter, simply referred to as first carbonaceous particles) more than adherence to lead contained in the negative electrode material. Furthermore, it is considered that the carboxy group of the first fatty acid interacts with a hydroxy group or water contained in an oxide layer or a layer of adsorbed water layered on the surface of lead by at least one of a covalent bond or a hydrogen bond and thus a binding action is obtained. It is considered that outflow of the first carbonaceous particles is suppressed by the binding action of the carboxy group of the first fatty acid and the hydrocarbon moiety adhered to the first carbonaceous particles. The first fatty acid has a lower molecular weight than a general polymer binder, and therefore it is expected that the first fatty acid is more easily eluted in the electrolyte solution than a polymer binder. Furthermore, it is considered that the balance between the hydrophobicity due to the hydrocarbon moiety and the hydrophilicity of the carboxy group is important for the effect of suppressing outflow of the first carbonaceous particles. However, contrary to the expectation, the first fatty acid adheres to the first carbonaceous particles and lead, and thus elution of the first fatty acid itself to the electrolyte solution is suppressed, and a binding effect is obtained because, in the first fatty acid, the number of carbon atoms is 8 to 30 and the number of carboxy groups is 1. Therefore, it is considered that the effect of suppressing outflow of the first carbonaceous particles is exhibited.

Meanwhile, polymer binders such as carboxymethylcellulose (CMC), sodium alginate, and polyacrylic acid are considered to have an effect of suppressing outflow of the first carbonaceous particles. These binders have a plurality of carboxy groups, and may have a hydrophilic group other than the carboxy groups. Such a binder gels with water molecules by the action of the plurality of hydrophilic groups under an acidic condition. Therefore, it is considered that the binder is bonded, like a paste by hydrogen bonding via water molecules in a gelled state, to the oxide layer or the layer of adsorbed water layered on the surface of lead.

In the case of the first fatty acid, gelation as in the case of the polymer binder is prevented by the hydrophobicity of the hydrocarbon moiety. In other words, it can be said that the mechanism to exhibit the binding action is different between the first fatty acid and the polymer binder. From such a difference in mechanism, in the case of the first fatty acid, the effect of binding the first carbonaceous particles is easily affected by the specific surface area Sn of the negative electrode material or the DBP oil absorption Y of the carbonaceous material. In the first aspect and the second aspect of the present invention, the content of the first fatty acid is determined according to at least one of the specific surface area Sn of the negative electrode material or the DBP oil absorption Y of the carbonaceous material. Therefore, a high effect of suppressing outflow of the first carbonaceous material can be obtained using the first fatty acid.

In the negative electrode material, if the surface of lead is covered with an organic component, the charge acceptability generally becomes low. Meanwhile, in the first aspect and the second aspect of the present invention, lowering of the charge acceptability in the negative electrode plate can be reduced. This is considered to be because the first fatty acid has a lower molecular weight than a polymer binder such as CMC and does not gel and, in addition, the hydrocarbon moiety of the first fatty acid easily adheres to the first carbonaceous material and thus the fatty acid is thinly adhered to the lead surface.

An increase in the specific surface area of the negative electrode material generally enhances the charge acceptability, and increases the amount of overcharge. Meanwhile, in the first aspect and the second aspect of the present invention, the surface of lead is thinly covered by the action of the carboxy group of the first fatty acid, and thus lowering of the charge acceptability can be suppressed, a side reaction at the time of overcharge is reduced, and the amount of overcharge can be reduced. Thus, a relatively high charge acceptability can be ensured while reducing the amount of overcharge.

[3] In the first aspect of the present invention in [1], the ratio Cf/Sn may be 1000 ppm $\cdot m^{-2} \cdot g$ or less. If the ratio Cf/Sn is in such a range, a higher charge acceptability is easily ensured.

[4] In any one of [1] to [3] above, if the lead-acid battery satisfies both Cf/Sn $\geq$ 20 ppm $\cdot m^{-2} \cdot g$ and Cf/Y $\geq$ 0.1 ppm $\cdot mL^{-1} \cdot 100$ g, the effect of suppressing outflow of the first carbonaceous material to the electrolyte solution is further enhanced.

[5] In any one of [1] to [4] above, the ratio Cf/Y may be 12 ppm $-mL^{-1} \cdot 100$ g or less. If the ratio Cf/Y is in such a range, a higher charge acceptability is easily ensured.

[6] In any one of [1] to [5] above, the ratio Cf/Y may be 0.12 ppm $-mL^{-1} \cdot 100$ g or more. In such a range, the amount of overcharge is further easily reduced.

[7] In any one of [1] to [6] above, the content Cf of the first fatty acid may be 20 ppm or more and 600 ppm or less on a mass basis. In a case where Cf is in such a range, the effect of suppressing outflow of the carbonaceous material and the effect of reducing the amount of overcharge are excellent, and a higher charge acceptability is easily ensured. In other words, these properties are easily balanced.

[8] In any one of [1] to [7] above, the content Cc1 of the first carbonaceous material is preferably 2 mass% or less. In a case where Cc1 is in such a range, a high charge acceptability is easily ensured while suppressing outflow of the first carbonaceous material to the electrolyte solution to a low level.

[9] In any one of [1] to [8] above, the first carbonaceous material may contain carbon black. Carbon black has a developed secondary particle structure, and therefore the specific surface area Sn of the negative electrode material or the DBP oil absorption Y of the first carbonaceous material tends to be large. Even in a case where carbon black is used in the negative electrode material, a high binding effect by the first fatty acid on the first carbonaceous material can be obtained, and outflow of the first carbonaceous material to the electrolyte solution can be reduced, by determining the content Cf of the first fatty acid according to the specific surface area Sn or the DBP oil absorption Y.

[10] In any one of [1] to [9] above, the negative electrode material may further contain a second carbonaceous material having a particle size of 32 $\mu$m or more. If the negative electrode material contains the second carbonaceous material, the life performance in the case of repeating charge and discharge in a PSOC (hereinafter, sometimes referred to as PSOC life performance) can be improved.

[11] In [10] above, the second carbonaceous material may contain graphite. In this case, the PSOC life performance can be further improved.

The lead-acid battery according to the first aspect or the second aspect of the present invention may be a valve regulated lead-acid battery (VRLA), but is particularly suitable for a flooded-type (vent-type) lead-acid battery. A VRLA is also referred to as a sealed lead-acid battery.

The content Cc1 of the first carbonaceous material and the content Cf of the first fatty acid in the negative electrode material, the specific surface area Sn of the negative electrode material, and the DBP oil absorption Y of the first carbonaceous material are values determined for the negative electrode material collected from the negative electrode plate taken out from the lead-acid battery in a full charge state.

In the present specification, the specific surface area Sn of the negative electrode material is a specific surface area determined with a Brunauer-Emmett-Teller (BET) method (BET specific surface area) (unit: $m^2/g$). The BET specific surface area is a specific surface area determined using the BET equation with a gas adsorption method in which a nitrogen gas is used as an adsorption gas.

The DBP oil absorption refers to the amount (mL) of dibutyl phthalate (DBP) adsorbed or absorbed by 100 g of a powder. Therefore, the unit of the DBP oil absorption is represented by mL/100 g. A method of measuring the DBP oil absorption is specified in JIS K 6217-4-2017. In the first carbonaceous material, primary particles aggregate to shape secondary particles and DBP is absorbed in voids between the primary particles in the secondary particles in some cases, and the voids are reflected in the DBP oil absorption.

A negative electrode material and a positive electrode material are each usually held by a current collector. An electrode material is a part of a plate excluding a current collector. A member such as a mat or pasting paper may be stuck to the plate. Such a member (also referred to as a sticking member) is used integrally with the plate and is thus included in the plate. In a case where the plate includes a sticking member (such as a mat or pasting paper), the electrode material is a part of the plate excluding the current collector and the sticking member. Among positive electrode plates, a clad-type positive electrode plate includes a plurality of porous tubes, a spine inserted into each tube, a current collecting portion connecting a plurality of spines, a positive electrode material filling each tube in which the spine is inserted, and a joint connecting the plurality of tubes. In the clad-type positive electrode plate, the positive electrode material is a part of the plate excluding the tubes, the spines, the current collecting portion, and the joint. In the clad-type positive electrode plate, the spines and the current collecting portion may be collectively referred to as a positive electrode current collector.

The full charge state of the flooded-type lead-acid battery is defined by the definition of JIS D 5301:2019. More specifically, the full charge state is a state where the lead-acid battery is charged as follows. In a water bath at 25°C ± 2°C, while the terminal voltage (V) during charge is measured or the electrolyte solution density is subjected to temperature correction to 20°C every 15 minutes, the lead-acid battery is charged at a current (A) 0.2 times as large as a numerical value (numerical value whose unit is Ah) described as a rated capacity until the terminal voltage (V) or the electrolyte solution density obtained as described above exhibits a constant value at three significant digits continuously three times. In the case of a valve regulated lead-acid battery, the full charge state is a state where the lead-acid battery is charged as follows. In an air tank at 25°C ± 2°C, the lead-acid battery is subjected to constant current constant voltage charge of 2.23 V/cell at a current (A) 0.2 times as large as a numerical value (numerical value whose unit is Ah) described as a rated capacity, and the charge is completed when the charge current during constant voltage charge becomes a value (A) 0.005 times as large as the numerical value (numerical value whose unit is Ah) described as the rated capacity.

The lead-acid battery in the full charge state refers to the lead-acid battery obtained by fully charging a formed lead-acid battery. The full charge of the lead-acid battery may be performed immediately after the formation or after a lapse of time from the formation so long as the charge is performed after the formation (for example, the lead-acid battery in use (preferably at the initial stage of use) after formation may be fully charged). The battery at the initial stage of use refers to the battery that has been used for a not so long time with almost no deterioration.

In the present specification, the up-down direction of the lead-acid battery or constituent elements (such as the plate, the container, and the separator) of the lead-acid battery means the up-down direction of the lead-acid battery in the vertical direction in a state where the lead-acid battery is in use. Each of the positive electrode plate and the negative electrode plate includes a lug for connection to an external terminal. In a horizontal valve regulated lead-acid battery or the like, a lug may be provided at a side portion of a plate so as to protrude laterally, but in many lead-acid batteries, a lug is usually provided at an upper portion of a plate so as to protrude upward.

Hereinafter, the lead-acid battery according to the first aspect or the second aspect of the present invention including [1] to [11] above will be more specifically described for each main constituent requirement. To the extent that there is no technical contradiction, at least one in [1] to [11] above and at least one element described below may be combined.

[Lead-Acid Battery]

(Negative Electrode Plate)

The negative electrode plate usually includes a negative electrode current collector in addition to the negative electrode material.

(Negative Electrode Current Collector)

The negative electrode current collector may be shaped by casting lead (Pb) or a lead alloy, or may be shaped by processing a lead sheet or a lead alloy sheet. Examples of the processing method include expanding and punching. A grid-like current collector is preferably used as the negative electrode current collector because use of a grid-like current collector facilitates support of the negative electrode material.

The lead alloy used in the negative electrode current collector may be any of a Pb-Sb-based alloy, a Pb-Ca-based alloy, or a Pb-Ca-Sn (tin) - based alloy. The lead or the lead alloy may further contain an additive element that is at least one selected from the group consisting of Ba, Ag, Al, Bi, As, Se, Cu, and the like. The negative electrode current collector may include a surface layer. The surface layer and an inner layer of the negative electrode current collector may have different compositions. The surface layer may be layered so as to cover the whole negative electrode current collector, or may be layered on a part of the negative electrode current collector. The surface layer may be layered on the lug of the negative electrode current collector. The surface layer on the lug may contain Sn (tin) or a Sn (tin) alloy.

(Negative Electrode Material)

The negative electrode material contains the first carbonaceous material and the first fatty acid. The negative electrode material further contains a negative active material (specifically, lead or lead sulfate) that exhibits a capacity through a redox reaction. The negative electrode material may further contain the second carbonaceous material. The negative electrode material may contain an additive other than the first carbonaceous material, the second carbonaceous material, and the first fatty acid. Examples of the additive include organic expanders, barium sulfate, and fibers (such as resin fibers), but are not limited thereto. Note that the negative active material in a charge state is spongy lead, but an unformed negative electrode plate is usually prepared using a lead powder.

(Carbonaceous Material)

The carbonaceous material contained in the negative electrode material contains at least the first carbonaceous material, and may contain the first carbonaceous material and the second carbonaceous material.

The content Cc1 of the first carbonaceous material in the negative electrode material is 0.4 mass% or more, and may be 0.5 mass% or more. In a case where the content Cc1 is in such a range, the first carbonaceous material tends to remarkably flow out to the electrolyte solution. In the first aspect and the second aspect of the present invention, the outflow of the first carbonaceous material to the electrolyte solution in such a case can be reduced. Furthermore, a high charge acceptability is easily ensured. The content Cc1 may be 5 mass% or less, or may be 3 mass% or less. The content Cc1 is preferably 2 mass% or less from the viewpoint of easily ensuring a high charge acceptability while suppressing outflow of the first carbonaceous material to the electrolyte solution to a low level.

The content Cc1 of the first carbonaceous material may be 0.4 mass% or more (or 0.5 mass% or more) and 5 mass% or less, 0.4 mass% or more (or 0.5 mass% or more) and 3 mass% or less, or 0.4 mass% or more (or 0.5 mass% or more) and 2 mass% or less.

The first carbonaceous material preferably contains at least carbon black. In carbon black, the structure of secondary particles is developed, and the binding property of the first fatty acid is easily affected. Even in such a case, the content Cf of the first fatty acid is determined according to at least one of the specific surface area Sn of the negative electrode material or the DBP oil absorption Y of the carbonaceous material, and thus an excellent effect of suppressing outflow of the first carbonaceous material to the electrolyte solution is obtained.

Examples of the carbon black include acetylene black, furnace black, and lamp black. Furnace black also includes ketjen black (product name). The negative electrode material may contain one kind, or a combination of two or more kinds of the first carbonaceous materials (for example, these carbon blacks).

The specific surface area Sc of the first carbonaceous material is, for example, 20 $m^2/g$ or more, and may be 25 $m^2/g$ or more or 28 $m^2/g$ or more. In a case where the specific surface area Sc is in such a range, an excessive increase in the content of the first fatty acid is easily suppressed, and a high charge acceptability is easily ensured. The specific surface area Sc of the first carbonaceous material is, for example, 1500 $m^2/g$ or less, and may be 1300 $m^2/g$ or less. From the viewpoint of further suppressing outflow of the first carbonaceous material, the specific surface area Sc is preferably 800 $m^2/g$ or less, and may be 200 $m^2/g$ or less or 150 $m^2/g$ or less.

In the present specification, the specific surface area Sc of the first carbonaceous material is a specific surface area by a BET method (BET specific surface area) (unit: $m^2/g$) determined with a gas adsorption method using a nitrogen gas. The specific surface area Sc of the carbonaceous material is a value determined for the negative electrode plate taken out from the lead-acid battery in the full charge state.

The specific surface area Sc of the first carbonaceous material may be 20 $m^2/g$ or more (or 25 $m^2/g$ or more) and 1500 $m^2/g$ or less, 20 $m^2/g$ or more (or 25 $m^2/g$ or more) and 1300 $m^2/g$ or less, 20 $m^2/g$ or more (or 25 $m^2/g$ or more) and 800 $m^2/g$ or less, 20 $m^2/g$ or more (or 25 $m^2/g$ or more) and 200 $m^2/g$ or less, 20 $m^2/g$ or more (or 25 $m^2/g$ or more) and 150 $m^2/g$ or less, 28 $m^2/g$ or more and 1500 $m^2/g$ or less (or 1300 $m^2/g$ or less), 28 $m^2/g$ or more and 800 $m^2/g$ or less (or 200 $m^2/g$ or less), or 28 $m^2/g$ or more and 150 $m^2/g$ or less.

The DBP oil absorption Y of the first carbonaceous material is, for example, 30 mL/100 g or more, and may be 50 mL/100 g or more or 65 mL/100 g or more. In a case where the DBP oil absorption Y is in such a range, an excessive increase in the content of the first fatty acid is easily suppressed, and a high charge acceptability is easily ensured. In addition, the effect of suppressing outflow of the first carbonaceous material to the electrolyte solution is further enhanced. The DBP oil absorption Y of the first carbonaceous material is, for example, 600 mL/100 g or less, and may be 500 mL/100 g or less. From the viewpoint of further suppressing outflow of the first carbonaceous material, the DBP oil absorption Y is preferably 400 mL/100 g or less, and may be 360 mL/100 g or less or 200 mL/100 g or less.

The DBP oil absorption Y may be 30 mL/100 g or more and 600 mL/100 g or less (or 500 mL/100 g or less), 30 mL/100 g or more and 400 mL/100 g or less (or 360 mL/100 g or less), 30 mL/100 g or more (or 50 mL/100 g or more) and 200 mL/100 g or less, 50 mL/100 g or more and 600 mL/100 g or less (or 500 mL/100 g or less), 50 mL/100 g or more and 400 mL/100 g or less (or 360 mL/100 g or less), 65 mL/100 g or more and 600 mL/100 g or less (or 500 mL/100 g or less), 65 mL/100 g or more and 400 mL/100 g or less (or 360 mL/100 g or less), or 65 mL/100 g or more and 200 mL/100 g or less.

Examples of the second carbonaceous material include graphite, hard carbon, and soft carbon. The negative electrode material may contain one kind, or a combination of two or more kinds of the second carbonaceous materials. If the first carbonaceous material and the second carbonaceous material are used in combination, the PSOC life performance can be improved. From the viewpoint of easily ensuring higher PSOC life performance, the second carbonaceous material preferably contains at least graphite.

Among the second carbonaceous materials, the carbonaceous material having an intensity ratio $I_D/I_G$, which is a ratio of a peak appearing in a range of 1300 $cm^{-1}$ or more and 1350 $cm^{-1}$ or less (D band) to a peak appearing in a range of 1550 $cm^{-1}$ or more and 1600 $cm^{-1}$ or less (G band) in a Raman spectrum, of 0 or more and 0.9 or less is referred to as graphite. The graphite may be either artificial graphite or natural graphite.

The content Cc2 of the second carbonaceous material in the negative electrode material may be 0.01 mass% or more, or 0.05 mass% or more. In a case where the content Cc2 is in such a range, higher PSOC life performance is easily obtained while suppressing outflow of the first carbonaceous material to the electrolyte solution. Furthermore, a high charge acceptability is easily obtained. From the viewpoint of easily suppressing the amount of overcharge to a low level, the content Cc2 may be 0.5 mass% or less, or 0.1 mass% or less.

The content Cc2 of the second carbonaceous material in the negative electrode material may be 0.01 mass% or more (or 0.05 mass% or more) and 0.5 mass% or less, or 0.01 mass% or more (or 0.05 mass% or more) and 0.1 mass% or less.

The proportion of the first carbonaceous material (carbon black or the like) in the whole carbonaceous material (for example, the total amount of the first carbonaceous material and the second carbonaceous material) is, for example, 50 mass% or more, and may be 75 mass% or more, 80 mass% or more, or 90 mass% or more. In a case where the proportion of the first carbonaceous material (carbon black or the like) is in such a range, the first carbonaceous material tends to remarkably flow out to the electrolyte solution, but even in such a case, an excellent effect of suppressing the outflow is obtained. Furthermore, a higher charge acceptability can be ensured. The proportion of the first carbonaceous material (carbon black or the like) in the whole carbonaceous material (for example, the total amount of the first carbonaceous material and the second carbonaceous material) is, for example, 100 mass% or less, and may be 95 mass% or less. The carbonaceous material may include only the first carbonaceous material (or carbon black). The carbonaceous material may contain at least carbon black and graphite.

The proportion of the first carbonaceous material (carbon black or the like) in the whole carbonaceous material (for example, the total amount of the first carbonaceous material and the second carbonaceous material) may be 50 mass% or more and 100 mass% or less (or 95 mass% or less), 75 mass% or more and 100 mass% or less (or 95 mass% or less), 80 mass% or more and 100 mass% or less (or 95 mass% or less), or 90 mass% or more and 100 mass% or less (or 95 mass% or less).

(First Fatty Acid)

The first fatty acid has 8 or more, and preferably 9 or more carbon atoms. The first fatty acid has 30 or less carbon atoms, and may have 24 or less, or 20 or less carbon atoms. When the first fatty acid is used, elution of the first fatty acid to the electrolyte solution is suppressed, and a high binding property to the carbonaceous material can be ensured, so that an excellent effect of suppressing outflow of the carbonaceous material is obtained. The first fatty acid may be contained in the electrolyte solution of the lead-acid battery. In this case, for example, an electrolyte solution prepared using the first fatty acid may be used for assembly of the lead-acid battery. Alternatively, an electrolyte solution prepared using a compound capable of producing the first fatty acid in the electrolyte solution of the lead-acid battery may be used for assembly of the lead-acid battery. Examples of such a compound include esters (for example, alkyl esters) of the first fatty acid. Such a compound may be capable of producing the first fatty acid, for example, at the time of preparing an electrolyte solution. In the alkyl ester, the number of carbon atoms in the alkyl moiety is not particularly limited, and may be, for example, 1 to 30.

The first fatty acid has 8 or more (or 9 or more) and 30 or less carbon atoms, and may have 8 or more (or 9 or more) and 24 or less, or 8 or more (or 9 or more) and 20 or less carbon atoms.

The first fatty acid may be either saturated or unsaturated. The number of carbon-carbon unsaturated bonds included in the first fatty acid is, for example, 6 or less, and may be 4 or less or 2 or less according to the number of carbon atoms of the first fatty acid. The number of carbon-carbon unsaturated bonds included in the first fatty acid may be 1 or more. From the viewpoint of easily balancing the state of adhesion to the carbonaceous material and lead, the fatty acid preferably has no substituent other than one carboxy group.

Specific examples of the first fatty acid include octanoic acid, nonanoic acid (pelargonic acid), capric acid, lauric acid, myristic acid, palmitic acid, stearic acid, oleic acid, linoleic acid, linolenic acid, arachidic acid, arachidonic acid, behenic acid, eicosapentaenoic acid, and docosahexaenoic acid.

The negative electrode material may contain one kind, or a combination of two or more kinds of the first fatty acids.

The content Cf of the first fatty acid in the negative electrode material is, for example, 15 ppm or more on a mass basis. Depending on the specific surface area Sn of the negative electrode material or the DBP oil absorption Y of the carbonaceous material, Cf is preferably 20 ppm or more and may be 50 ppm or more on a mass basis from the viewpoint of easily obtaining a higher effect of suppressing outflow of the carbonaceous material and a higher effect of reducing the amount of overcharge. Cf is, for example, 1000 ppm or less on a mass basis. Depending on the specific surface area Sn of the negative electrode material or the DBP oil absorption Y of the first carbonaceous material, Cf is preferably 600 ppm or less on a mass basis from the viewpoint of easily obtaining a higher charge acceptability.

The content Cf of the first fatty acid in the negative electrode material may be 15 ppm or more and 1000 ppm or less (or 600 ppm or less), 20 ppm or more and 1000 ppm or less (or 600 ppm or less), or 50 ppm or more and 1000 ppm or less (or 600 ppm or less) on a mass basis.

The ratio Cf/Sn is 20 ppm $\cdot$m$^{-2}$ $\cdot$g or more. From the viewpoint of easily ensuring a higher effect of suppressing outflow of the first carbonaceous material, the ratio Cf/Sn may be 23 ppm $\cdot$m$^{-2}$ $\cdot$g or more. As the ratio Cf/Sn increases, the effect of suppressing outflow of the first carbonaceous material tends to improve, but the charge acceptability tends to deteriorate. From the viewpoint of easily ensuring a higher charge acceptability, the ratio Cf/Sn may be 1000 ppm $\cdot$m$^{-2}$ $\cdot$g or less, or 910 ppm $\cdot$m$^{-2}$ $\cdot$g or less. Note that ppm in the unit of the ratio Cf/Sn is derived from the content of Cf on a mass basis, and thus is based on mass.

The ratio Cf/Sn may be 20 ppm $\cdot$m$^{-2}$ $\cdot$g or more (or 23 ppm $\cdot$m$^{-2}$ $\cdot$g or more) and 1000 ppm $\cdot$m$^{-2}$ $\cdot$g or less, or 20 ppm $\cdot$m$^{-2}$ $\cdot$g or more (or 23 ppm $\cdot$m$^{-2}$ $\cdot$g or more) and 910 ppm $\cdot$m$^{-2}$ $\cdot$g or less.

The ratio Cf/Y may be 0.1 ppm $\cdot$mL$^{-1}$ $\cdot$100 g or more. If the ratio Cf/Y is in such a range, a high effect of suppressing outflow of the first carbonaceous material is obtained. From the viewpoint of further reducing the amount of overcharge, the ratio Cf/Y may be 0.12 ppm $\cdot$mL$^{-1}$ $\cdot$100 g or more. The ratio Cf/Y is, for example, 12 ppm $\cdot$mL$^{-1}$ $\cdot$100 g or less, and may be 9.5 ppm $\cdot$mL$^{-1}$ $\cdot$100 g or less. In this case, a higher charge acceptability is easily ensured. From the viewpoint of further enhancing the charge acceptability, the ratio Cf/Y may be 5 ppm $\cdot$mL$^{-1}$$\cdot$100 g or less, or 3.5 ppm $\cdot$mL$^{-1}$ $\cdot$100 g or less. Note that ppm in the unit of the ratio Cf/Y is derived from the content of Cf on a mass basis, and thus is based on mass.

The ratio Cf/Y may be 0.1 ppm $\cdot$mL$^{-1}$ $\cdot$100 g or more (or 0.12 ppm $\cdot$mL$^{-1}$ $\cdot$100 g or more) and 12 ppm $\cdot$mL$^{-1}$ $\cdot$100 g or less, 0.1 ppm $\cdot$mL$^{-1}$ $\cdot$100 g or more (or 0.12 ppm $\cdot$mL$^{-1}$ $\cdot$100 g or more) and 9.5 ppm $\cdot$mL$^{-1}$ $\cdot$100 g or less, 0.1 ppm $\cdot$mL$^{-1}$ $\cdot$100 g or more (or 0.12 ppm $\cdot$mL$^{-1}$ $\cdot$100 g or more) and 5 ppm $\cdot$mL$^{-1}$ $\cdot$100 g or less, or 0.1 ppm $\cdot$mL$^{-1}$$\cdot$100 g or more (or 0.12 ppm $\cdot$mL$^{-1}$$\cdot$100 g or more) and 3.5 ppm $\cdot$mL$^{-1}$ $\cdot$100 g or less.

(Organic Expander)

Examples of the organic expander include lignin compounds and synthetic organic expanders. Examples of the lignin compounds include lignin and lignin derivatives (for example, lignin sulfonic acid and its salts (including alkali metal salts such as a sodium salt)). The synthetic organic expanders are an organic polymer containing a sulfur element. Examples of the synthetic organic expanders include condensates of a compound having a sulfur-containing group and an aromatic ring (such as a phenol compound or an aniline compound) with an aldehyde compound (aldehyde or its condensate such as formaldehyde). However, the organic expanders are not limited to these specific examples.

The negative electrode material may contain one kind, or a combination of two or more kinds of organic expanders.

The content of the organic expander in the negative electrode material is, for example, 0.01 mass% or more. The content of the organic expander is, for example, 1 mass% or less, and may be 0.5 mass% or less.

(Barium Sulfate)

The content of barium sulfate in the negative electrode material is, for example, 0.05 mass% or more, and may be 0.1 mass% or more. The content of barium sulfate is, for example, 3 mass% or less.

(Specific Surface Area Sn of Negative Electrode Material)

The specific surface area Sn of the negative electrode material is, for example, 0.3 m$^2$/g or more. From the viewpoint of easily ensuring a higher charge acceptability, the specific surface area Sn is preferably 0.5 m$^2$/g or more, and more preferably 0.8 m$^2$/g or more. The specific surface area Sn is, for example, 4 m$^2$/g or less. From the viewpoint of further enhancing the effect of suppressing the amount of overcharge, the specific surface area Sn is preferably 2.7 m$^2$/g or less, and more preferably 2.5 m$^2$/g or less. From the viewpoint of further enhancing the effect of suppressing outflow of the first carbonaceous material, the specific surface area Sn is preferably 1 m$^2$/g or less, and more preferably 0.88 m$^2$/g or less. The specific surface area Sn of the negative electrode material can be adjusted, for example, by adjusting the specific surface area and/or the content of the constituent components (particularly, the first carbonaceous material) of the negative electrode material.

The specific surface area Sn of the negative electrode material may be 0.3 m$^2$/g or more (or 0.5 m$^2$/g or more) and 4 m$^2$/g or less, 0.3 m$^2$/g or more (or 0.5 m$^2$/g or more) and 2.7 m$^2$/g or less, 0.3 m$^2$/g or more (or 0.5 m$^2$/g or more) and 2.5 m$^2$/g or less, 0.3 m$^2$/g or more (or 0.5 m$^2$/g or more) and 1 m$^2$/g or less, 0.3 m$^2$/g or more (or 0.5 m$^2$/g or more) and 0.88 m$^2$/g or less, 0.8 m$^2$/g or more and 4 m$^2$/g or less (or 2.7 m$^2$/g or less), 0.8 m$^2$/g or more and 2.5 m$^2$/g or less (or 1 m$^2$/g or less), or 0.8 m$^2$/g or more and 0.88 m$^2$/g or less.

(Analysis or Measurement of Negative Electrode Material)

Hereinafter, a method of analyzing the negative electrode material or its constituent components will be described. Prior to measurement or analysis, the lead-acid battery in the full charge state is disassembled to obtain the negative electrode plate to be analyzed. The obtained negative electrode plate is washed with water to remove sulfuric acid from the negative electrode plate. The washing with water is performed until it is confirmed that no change in color occurs in pH test paper pressed against the surface of the negative electrode plate after washing with water. However, the washing with water is performed within two hours. The negative electrode plate washed with water is dried at $60 \pm 5°C$ in a reduced pressure environment for about six hours. In a case where the negative electrode plate includes a sticking member, the sticking member is removed as necessary. Next, the negative electrode material is separated from the negative electrode plate to obtain a sample (hereinafter referred to as sample A). The sample A is pulverized as necessary and subjected to analysis.

(1) Measurement of Specific Surface Area Sn of Negative Electrode Material

The BET specific surface area Sn of the negative electrode material is evaluated with the following procedure.
First, the lead-acid battery in the full charge state is disassembled, and the negative electrode plate is taken out. Next, the negative electrode plate is washed with water to remove sulfuric acid in the negative electrode plate, and then the negative electrode plate is dried. From the dried negative electrode plate, the negative electrode material is collected. The collected negative electrode material is pretreated by heating at a temperature of 150°C for 1 hour in a nitrogen flow. The BET specific surface area of the pretreated material is determined by mass measurement, measurement with a gas adsorption method, and calculation using the BET equation. Specifically, the BET specific surface area is determined by measurement with the following apparatus under the following conditions and by calculation with the following calculation method.

Measuring apparatus: TriStar 3000 manufactured by Micromeritics Instrument Corporation
Adsorption gas: nitrogen gas having purity of 99.99% or more
Adsorption temperature: liquid nitrogen boiling point temperature (77 K)
Method of calculating BET specific surface area: in accordance with 7.2 of JIS Z 8830:2013

(2) Analysis of Fatty Acid

(2-1) Qualitative Analysis of Fatty Acid

The pulverized sample A is used. To $100.0 \pm 0.1$ g of the sample A, $150.0 \pm 0.1$ mL of chloroform is added, and the mixture is stirred at $20 \pm 5°C$ for 16 hours to extract a fatty acid. Then, the solid content is removed by filtration. For the chloroform solution in which the fatty acid obtained by extraction is dissolved or the fatty acid obtained by drying this chloroform solution, the structure of the fatty acid is specified by obtaining information from at least one selected from, for example, an infrared spectroscopic spectrum, an ultraviolet-visible absorption spectrum, an NMR spectrum, an LC-MS, or a pyrolysis GC-MS.

(2-2) Quantitative Analysis of Fatty Acid

An appropriate amount of the fatty acid obtained by drying the chloroform solution is dissolved in deuterated chloroform together with $m_r$ (g) of tetrachloroethane (TCE) measured with an accuracy of $\pm 0.0001$ g, and a $^1$H-NMR spectrum is measured. The integrated value ($S_a$) of the peak derived from the fatty acid having a chemical shift of 2.34 ppm and the integrated value ($S_r$) of the peak derived from TCE are determined, and the content $C_n$ (ppm) of the fatty acid in the negative electrode material on a mass basis is determined from the following formula.

$$C_n = S_a/S_r \times N_r/N_a \times M_a/M_r \times m_r/m \times 1000000$$

(In the formula, $M_a$ represents the molecular weight (more specifically, the molecular weight indicating the structure of the fatty acid in the chemical shift) of a structure showing a peak with a chemical shift of 2.34 ppm, and $N_a$ represents the number of hydrogen atoms bonded to carbon atoms of a main chain. $N_r$ represents the number of hydrogen atoms included in a molecule of a reference substance, $M_r$ represents the molecular weight of the reference substance, and m (g) represents the mass of the negative electrode material used for extraction.)
In this analysis, the reference substance is trichloroethylene (TCE), and therefore $N_r = 2$ and $M_r = 168$. In addition, m = 100 is set. For example, in a case where the fatty acid is oleic acid, $M_a$ is 59 and $N_a$ is 2.
The $^1$H-NMR spectrum is measured under the following conditions.
Apparatus: type AL400 nuclear magnetic resonance spectrometer, manufactured by JEOL Ltd.

Observation frequency: 395.88 MHz
Pulse width: 6.30 $\mu$s

Pulse repeating time: 74.1411 seconds
Number of integrations: 32
Measurement temperature: room temperature (20°C or higher and 35°C or lower)
Reference: 7.24 ppm
Sample tube diameter: 5 mm

In the quantitative analysis, the integrated value of the peak in the $^1$H-NMR spectrum is determined using data processing software "ALICE" manufactured by JEOL Ltd.

(3) Analysis of Carbonaceous Material

(3-1) Separation and Quantification of Carbonaceous Material

The pulverized sample A is used. Per 5 g of the sample A, 30 mL of a nitric acid aqueous solution having a concentration of 60 mass% is added, and the mixture is heated at 70°C $\pm$ 5°C. Furthermore, 10 g of disodium ethylenediaminetetraacetate, 30 mL of ammonia water having a concentration of 28 mass%, and 100 mL of water are added per 5 g of the sample A, and heating is continued to dissolve a soluble part. The sample thus pretreated is collected by filtration. The collected sample is sieved with a sieve having an opening of 500 $\mu$m to remove components having a large size such as a reinforcing material, and a component having passed through the sieve is collected as the carbonaceous material.

Next, the first carbonaceous material and the second carbonaceous material are separated with the following procedure.

When the collected carbonaceous material is sieved with a wet method using a sieve having an opening of 32 $\mu$m, the carbonaceous material remaining on the sieve without passing through a sieve mesh is regarded as the second carbonaceous material, and the carbonaceous material passing through the sieve mesh is regarded as the first carbonaceous material. That is, the particle size of each carbonaceous material is based on the size of the mesh opening of the sieve. For wet sieving, JIS Z 8815:1994 can be referred to.

Specifically, the carbonaceous material is placed on a sieve having an opening of 32 $\mu$m, and sieved by gently shaking the sieve for 5 minutes while sprinkling ion-exchange water. The second carbonaceous material remaining on the sieve is collected from the sieve by pouring ion-exchange water over the sieve, and separated from the ion-exchange water by filtration. The first carbonaceous material having passed through the sieve is collected by filtration using a nitrocellulose membrane filter (opening: 0.1 $\mu$m). The collected first carbonaceous material and the collected second carbonaceous material are each dried at a temperature of 100°C $\pm$ 5°C for 2 hours. As the sieve having an opening of 32 $\mu$m, a sieve is used that is specified in JIS Z 8801-1:2019 and has a sieve mesh having a nominal opening of 32 $\mu$m.

The proportion of the first carbonaceous material in the whole carbonaceous material is determined by calculating the ratio (mass%) of the measured mass of the first carbonaceous material to the mass of the carbonaceous material (total mass of the carbonaceous materials).

(3-2) Specific Surface Area Sc of First Carbonaceous Material

The BET specific surface area Sc of the first carbonaceous material is determined using the BET equation with a gas adsorption method using the first carbonaceous material separated by the procedure described in (3-1) above. The first carbonaceous material is pretreated by heating at a temperature of 150°C for 1 hour in a nitrogen flow for moisture removal. Using the pretreated first carbonaceous material, the BET specific surface area of the first carbonaceous material is determined in accordance with the case of the specific surface area Sn of the negative electrode material of (1) above.

(3-3) DBP Oil Absorption Y of First Carbonaceous Material

The DBP oil absorption Y of the first carbonaceous material is measured using an absorptometer in accordance with JIS K 6217-4:2017 using the first carbonaceous material separated by the procedure described in (3-1) above. More specifically, a certain amount of the carbonaceous material is put into a mixing chamber of the absorptometer, and dibutyl phthalate (DBP) is dropped from an automatic burette at 4 ml/min while a rotor is rotated at 125 rpm. As time elapses, mixing proceeds, a powder in the mixing chamber shifts to a paste state, and thus resistance to rotation of the rotor occurs. Then, a curve is drawn in which when a certain region is reached, the torque rapidly increases with respect to the increase in the amount of DBP added, and decreases again. In the descending curve, a point at which the torque reaches 70% of the maximum value is set as an end point, and the amount of DBP used is used as the value of the adsorption amount. As the absorptometer, S410E manufactured by Asahisouken corporation is used. The measurement is performed so that when DBP is put into the automatic burette of the absorptometer, the DBP contains no bubble.

(4) Quantification of Organic Expander

The pulverized sample A is immersed in a 1 mol/L NaOH aqueous solution to extract the organic expander. Insoluble components are removed from the NaOH aqueous solution containing the extracted organic expander by filtration, and a filtrate (hereinafter, also referred to as a filtrate C) is collected.

A predetermined amount of the filtrate C is weighed out, desalted, then concentrated, and dried to obtain a powder of the organic expander (hereinafter, also referred to as a sample D). The desalination is performed by using a desalination column, by passing the filtrate C through an ion-exchange membrane, or by putting the filtrate C into a dialysis tube and immersing the dialysis tube in distilled water.

The organic expander is specified by combining information obtained from an infrared spectroscopic spectrum of the sample D, an ultraviolet-visible absorption spectrum of a solution obtained by dissolving the sample D in distilled water or the like, an NMR spectrum of a solution obtained by dissolving the sample D in a solvent such as heavy water, a pyrolysis GC-MS capable of obtaining information on each compound included in a substance, and the like.

The ultraviolet-visible absorption spectrum of the filtrate C is measured. The content of the organic expander in the negative electrode material is quantified from the spectral intensity, a calibration curve prepared in advance, the amount of the filtrate C weighed out, and the mass of the sample A. In a case where the structural formula of the organic expander to be analyzed cannot be exactly specified and the calibration curve of the same organic expander cannot be used, a calibration curve is prepared using an available organic expander exhibiting an ultraviolet-visible absorption spectrum, an infrared spectroscopic spectrum, an NMR spectrum, and the like similar to those of the organic expander to be analyzed.

(5) Quantification of Barium Sulfate

To 10 g of the pulverized sample A, 50 ml of nitric acid having a concentration of 20 mass% is added, the mixture is heated for about 20 minutes, and thus a lead component is dissolved in the form of lead ions. The resulting solution is filtered, and the solid content including the carbonaceous material, barium sulfate, and the like is filtered off.

The obtained solid content is dispersed in water to form a dispersion, and then components other than the carbonaceous material and barium sulfate (such as a reinforcing material) are removed from the dispersion by using a sieve. Next, the dispersion is subjected to suction filtration using a membrane filter whose mass is measured in advance, and the membrane filter is dried together with the filtered sample in a dryer at 110°C $\pm$ 5°C. The filtered sample is a mixed sample of the carbonaceous material and barium sulfate. The mass of the membrane filter is subtracted from the total mass of the mixed sample (hereinafter, referred to as sample E) and the membrane filter after drying, and thus the mass of the sample E ($M_m$) is measured. Then, the sample E and the membrane filter are put into a crucible, and burned and incinerated at 1300°C or higher. The remaining residue is barium oxide. The mass of the barium oxide is converted to the mass of barium sulfate, and thus the mass of barium sulfate ($M_B$) is determined.

(Others)

The negative electrode material may contain a fatty acid other than the first fatty acid (hereinafter, referred to as second fatty acid). The second fatty acid is, for example, at least one selected from the group consisting of fatty acids having 7 or less carbon atoms and fatty acids having more than 30 carbon atoms. The content of the second fatty acid is preferably low from the viewpoint of obtaining a higher effect of suppressing outflow of the carbonaceous material and ensuring a higher charge acceptability. The content of the second fatty acid in the negative electrode material is, for example, 10 ppm or less, and may be 5 ppm or less. A case is also preferable in which the negative electrode material does not contain the second fatty acid. This case also includes a case where the amount of the second fatty acid in the negative electrode material is the detection limit or less.

An unformed negative electrode plate is prepared, for example, by applying a negative electrode paste to a negative electrode current collector or filling a negative electrode current collector with a negative electrode paste, followed by curing and drying. More specifically, the negative electrode paste used for preparing an unformed negative electrode plate is prepared, for example, by adding water and sulfuric acid (or a sulfuric acid aqueous solution) to a lead powder, the carbonaceous material, the first fatty acid, and, as necessary, various additives (such as the organic expander and barium sulfate), followed by mixing. At the time of curing, the unformed negative electrode plate is preferably cured at a temperature higher than room temperature at a high humidity. The negative electrode plate is prepared, for example, by forming the unformed negative electrode plate.

The formation can be performed, for example, by housing the element including the unformed negative electrode plate and the electrolyte solution containing sulfuric acid in the container of the lead-acid battery and charging the element in a state where the element is soaked with the electrolyte solution. However, the formation may be performed before assembly of the lead-acid battery or the element. The formation produces spongy lead.

(Positive Electrode Plate)

Positive electrode plates of lead-acid batteries are classified into a paste type, a clad type, and the like. Either a paste-type or a clad-type positive electrode plate may be used.

The positive electrode current collector may be shaped by casting lead (Pb) or a lead alloy, or may be shaped by processing a lead sheet or a lead alloy sheet. Examples of the processing method include expanding and punching. A grid-like current collector is preferably used as the positive electrode current collector because use of a grid-like current collector facilitates support of the positive electrode material.

The lead alloy used in the positive electrode current collector is preferably a Pb-Sb-based alloy, a Pb-Ca-based alloy, or a Pb-Ca-Sn (tin) - based alloy in terms of corrosion resistance and mechanical strength. The positive electrode current collector may include a surface layer. The surface layer and an inner layer of the positive electrode current collector may have different compositions. The surface layer may be layered so as to cover the whole positive electrode current collector, or may be layered on a part of the positive electrode current collector. The surface layer may be layered only on the grid part, only on the lug part, or only on the frame rib part of the positive electrode current collector.

The positive electrode material contains a positive active material (lead dioxide or lead sulfate) that exhibits a capacity through a redox reaction. The positive electrode material may contain another additive as necessary.

An unformed paste-type positive electrode plate is obtained by filling a positive electrode current collector with a positive electrode paste, followed by curing and drying. The positive electrode paste is prepared by mixing a lead powder, an additive, water, and sulfuric acid. An unformed clad-type positive electrode plate is shaped by filling a porous tube, in which a spine connected by a current collecting portion is inserted, with a lead powder or a slurry-like lead powder, and bonding a plurality of tubes with a joint. Then, the unformed positive electrode plate is formed to obtain a positive electrode plate.

The formation may be performed by charging the element in a state where the element including the unformed positive electrode plate is immersed in the electrolyte solution containing sulfuric acid in the container of the lead-acid battery. However, the formation may be performed before assembly of the lead-acid battery or the element.

(Separator)

The separator may be disposed between the negative electrode plate and the positive electrode plate. As the separator, for example, at least one selected from a nonwoven fabric or a microporous membrane is used.

The nonwoven fabric is a mat in which fibers are intertwined without being woven, and mainly includes fibers. In the nonwoven fabric, for example, 60 mass% or more of the nonwoven fabric is shaped with fibers. The fibers that may be used include glass fibers, polymer fibers (such as polyolefin fibers, acrylic fibers, and polyester fibers (such as polyethylene terephthalate fibers)), pulp fibers, and the like. Among these, glass fibers are preferable. The nonwoven fabric may contain a component other than the fibers (such as an acid resistant inorganic powder or a polymer as a binder) and the like.

Meanwhile, the microporous membrane is a porous sheet mainly including a component other than a fiber component and is obtained, for example, by extrusion-molding a composition containing a pore-forming additive into a sheet shape and then removing the pore-forming additive to shape pores. The microporous membrane preferably includes a material having acid resistance, and is preferably a microporous membrane mainly including a polymer component. The polymer component is preferably a polyolefin (polyethylene, polypropylene, or the like). The pore-forming additive is, for example, at least one selected from the group consisting of polymer powders and oils.

For example, the separator may include only a nonwoven fabric, or may include only a microporous membrane. The separator may be, as necessary, a laminate of a nonwoven fabric and a microporous membrane, a laminate of different kinds or the same kind of materials, or a laminate of different kinds or the same kind of materials with recesses and projections engaged to each other.

The separator may have a sheet shape or may be shaped into a bag shape. One sheet-like separator may be disposed so as to be interposed between the positive electrode plate and the negative electrode plate. One sheet-like separator in a folded state may be disposed so as to sandwich an electrode plate. In this case, the positive electrode plate sandwiched by the folded sheet-like separator and the negative electrode plate sandwiched by the folded sheet-like separator may be stacked, or alternatively, one of the positive electrode plate or the negative electrode plate may be sandwiched by the folded sheet-like separator, and the electrode plate and the other electrode plate may be stacked. The sheet-like separator may be folded into a bellows shape, and the positive electrode plate and the negative electrode plate may be sandwiched by the bellows-like separator so that the separator is interposed between the positive electrode plate and the negative electrode plate. In the case of using the separator folded into a bellows shape, the separator may be disposed so that the folded part is along the horizontal direction of the lead-acid battery (for example, so that the folded part is parallel to the horizontal direction), or the separator may be disposed so that the folded part is along the vertical direction (for example, so that the folded part is parallel to the vertical direction). In the separator folded into a bellows shape, recesses are alternately shaped on both main surface sides of the separator. The lugs are usually shaped on the upper parts of the positive electrode plate and the negative electrode plate, and therefore in a case where the separator is disposed so that the folded part is along the horizontal direction of the lead-acid battery, the positive electrode plate and the negative electrode plate are each disposed only in a recess on one main surface side of the separator (that is, the double separator is interposed between the positive electrode plate and the negative electrode plate adjacent to each other). In a case where the separator is disposed so that the folded part is along the vertical direction of the lead-acid battery, the positive electrode plate may be housed in a recess on one main surface side, and the negative electrode plate may be housed in a recess on the other main surface side (that is, the single separator may be interposed between the positive electrode plate and the negative electrode plate adjacent to each other). In the case of using the bag-shaped separator, the bag-shaped separator may house the positive electrode plate or may house the negative electrode plate.

(Electrolyte Solution)

The electrolyte solution is an aqueous solution containing sulfuric acid, and may gel as necessary.

The electrolyte solution may contain a cation (for example, a metal cation) and/or an anion (for example, an anion other than a sulfate anion (such as a phosphate ion)) as necessary. The metal cation is, for example, at least one selected from the group consisting of a Na ion, a Li ion, a Mg ion, and an Al ion.

In the lead-acid battery in the full charge state, the electrolyte solution at 20°C has a density of, for example, 1.20 $g/cm^3$ or more, and may have a density of 1.25 $g/cm^3$ or more. The density of the electrolyte solution at 20°C is 1.35 $g/cm^3$ or less, and preferably 1.32 $g/cm^3$ or less.

The density of the electrolyte solution at 20°C may be 1.20 $g/cm^3$ or more and 1.35 $g/cm^3$ or less, 1.20 $g/cm^3$ or more and 1.32 $g/cm^3$ or less, 1.25 $g/cm^3$ or more and 1.35 $g/cm^3$ or less, or 1.25 $g/cm^3$ or more and 1.32 $g/cm^3$ or less.

(Others)

The lead-acid battery includes at least one element and the electrolyte solution. The lead-acid battery may include one cell or two or more cells. In a case where the lead-acid battery includes a plurality of cells (in other words, a plurality of elements), the plurality of elements may be connected in series.

The lead-acid battery may be obtained, for example, by a manufacturing method including a step of housing an element and an electrolyte solution in a container (or a cell chamber of the container). Each cell of the lead-acid battery includes an element and the electrolyte solution housed in each cell chamber. The element is assembled by stacking the positive electrode plate, the negative electrode plate, and the separator so that the separator is interposed between the positive electrode plate and the negative electrode plate, prior to housing in the container or the cell chamber. The positive electrode plate, the negative electrode plate, the electrolyte solution, and the separator are each prepared prior to assembly of the element. A method of manufacturing the lead-acid battery may include a step of forming at least one of the positive electrode plate or the negative electrode plate as necessary after the step of housing the element and the electrolyte solution in the container or the cell chamber.

(Evaluation)

The outflow of the first carbonaceous material to the electrolyte solution, the charge acceptability, the amount of overcharge, and the PSOC life performance are evaluated with the following procedures (a) to (d). For the evaluation, a test battery is used that has a nominal voltage of 2 V and a rated 5-hour rate capacity of 32 Ah.

(a) Outflow of First Carbonaceous Material to Electrolyte Solution

The carbonaceous material is dispersed in the electrolyte solution at a concentration in a range of 1 ppm or more and 300 ppm or less on a mass basis, and thus a plurality of standard solutions having different concentrations is prepared.

A visual comparison is performed between the turbidity of the sample of the electrolyte solution taken out from the lead-acid battery in the full charge state and the turbidity of a standard solution, and the concentration of the carbonaceous material in the standard solution having a turbidity state closest to that of the sample is regarded as the concentration of the first carbonaceous material in the sample. On the basis of this concentration, the outflow of the first carbonaceous material to the electrolyte solution is evaluated. When the concentration of the carbonaceous material in the electrolyte solution is 3 ppm or less on a mass basis, a mark for visual recognition of the liquid level in the lead-acid battery can be visually recognized clearly, but when the concentration is more than 3 ppm, the mark becomes difficult to visually recognize.

(b) Charge Acceptability

The electric quantity at 10 seconds is measured using the test battery in the full charge state. Specifically, the test battery is discharged at 6.4 A for 30 minutes and left for 16 hours. Then, the test battery is subjected to constant current constant voltage charge at 2.42 V/cell while the upper limit of the current is 200 A, and the integrated electric quantity for 10 seconds (electric quantity at 10 seconds) at this time is measured. All of the operations are performed in a water bath at 25°C ± 2°C. The integrated electric quantity for 10 seconds is used as an index for evaluation of the charge acceptability.

(c) Amount of Overcharge

The amount of overcharge is evaluated with the following procedure using the test battery in the full charge state. Specifically, the test battery in the full charge state is subjected to constant voltage charge at a voltage of 2.4 V/cell for 168 hours in a water bath at a temperature of 60 ± 3°C. The charge current (A) at the time of the constant voltage charge is multiplied by the charging time (h) to obtain the integrated value (Ah) of the amount of overcharge. The amount of overcharge is evaluated on the basis of the integrated value.

(d) PSOC Life Performance

The test battery is charged and discharged in an air tank at 40°C ± 3°C according to a pattern shown in Table 1. In steps 1 to 10, the number of cycles until the terminal voltage of the test battery reaches 1.2 V per unit cell is used as an index of the PSOC cycle life performance.
In the present specification, 1 CA is a current value (A) having the same numerical value as the nominal capacity (Ah) of a battery. For example, for a battery having a nominal capacity of 30 Ah, 1 CA is 30 A and 1 mCA is 30 mA.

[Table 1]

| Step | Contents | Test condition | | Air tank temperature (°C) |
|------|----------|----------------|----|----|
| | | Current, voltage, or number of times of repeat | Termination condition | |
| 1 | CC discharge | 1 C A | 59 s | 40°C |
| 2 | CC discharge | 300 A | 1 s | |
| 3 | CV charge | 2.4 V /cell, up to 50 A | 10 s | |
| 4 | CC discharge | 1 C A | 5 s | |
| 5 | Repeat steps 3 and 4 | 5 times | - | |
| 6 | Repeat steps 1 to 5 | 50times | - | |
| 7 | CV charge | 2.4 V /cell, up to 50 A | 900 s | |
| 8 | Repeat steps 1 to 7 | 72times | - | |
| 9 | Pause | 15h | - | |
| 10 | Return to step 1 | - | - | |

CC discharge:      Constant current discharge
CV charge:        Constant voltage charge

The elements described in the present specification can be combined in any combination.
The lead-acid battery according to the first aspect and the second aspect of the present invention will be collectively described below.
(1) A lead-acid battery including:

an element; and
an electrolyte solution,

wherein the element includes a positive electrode plate containing a positive electrode material, a negative electrode plate containing a negative electrode material, and a separator interposed between the positive electrode plate and the negative electrode plate,

the negative electrode material contains a first carbonaceous material having a particle size of less than 32 $\mu$m and a fatty acid having 8 or more and 30 or less carbon atoms (first fatty acid),

a content Cc1 of the first carbonaceous material in the negative electrode material is 0.4 mass% or more, and

a ratio Cf/Sn of a content Cf to a specific surface area Sn is 20 ppm $\cdot$m$^{-2}$ $\cdot$g or more where Cf (ppm) represents a content of the fatty acid on a mass basis in the negative electrode material and Sn (m$^2$/g) represents a specific surface area of the negative electrode material.

(2) In (1) above, Cf/Sn may be 1000 ppm $\cdot$m$^{-2}$ $\cdot$g or less, or 910 ppm $\cdot$m$^{-2}$ $\cdot$g or less.

(3) In (1) or (2) above, Cf/Sn may be 23 ppm $\cdot$m$^{-2}$ $\cdot$g or more.

(4) In any one of (1) to (3) above, a ratio Cf/Y of a content Cf to a DBP oil absorption Y may be 0.1 ppm $\cdot$mL$^{-1}$$\cdot$100 g or more where Y represents a DBP oil absorption of the first carbonaceous material.

(5) A lead-acid battery including:

an element; and

an electrolyte solution,

wherein the element includes a positive electrode plate containing a positive electrode material, a negative electrode plate containing a negative electrode material, and a separator interposed between the positive electrode plate and the negative electrode plate,

the negative electrode material contains a first carbonaceous material having a particle size of less than 32 $\mu$m and a fatty acid having 8 or more and 30 or less carbon atoms (first fatty acid),

a content Cc1 of the first carbonaceous material in the negative electrode material of 0.4 mass% or more, wherein

a ratio Cf/Y of a content Cf to a DBP oil absorption Y is 0.1 ppm $\cdot$mL$^{-1}$$\cdot$100 g or more where Cf (ppm) represents a content of the fatty acid on a mass basis in the negative electrode material and Y represents a DBP oil absorption of the first carbonaceous material.

(6) In (4) or (5) above, Cf/Y may be 12 ppm $\cdot$mL$^{-1}$ $\cdot$100 g or less, 9.5 ppm $\cdot$mL$^{-1}$ $\cdot$100 g or less, 5 ppm $\cdot$mL$^{-1}$ $\cdot$100 g or less, or 3.5 ppm $\cdot$mL$^{-1}$ $\cdot$100 g or less.

(7) In any one of (4) to (6) above, Cf/Y may be 0.12 ppm $\cdot$mL$^{-1}$ $\cdot$100 g or more.

(8) In any one of (4) to (7) above, the DBP oil absorption Y may be 30 mL/100 g or more, 50 mL/100 g or more, or 65 mL/100 g or more.

(9) In any one of (4) to (8) above, the DBP oil absorption Y may be 600 mL/100 g or less, 500 mL/100 g or less, 400 mL/100 g or less, 360 mL/100 g or less, or 200 mL/100 g or less.

(10) In any one of (1) to (9) above, the content Cf of the first fatty acid may be 15 ppm or more, 20 ppm or more, or 50 ppm or more on a mass basis.

(11) In any one of (1) to (10) above, the content Cf of the first fatty acid may be 1000 ppm or less, or 600 ppm or less on a mass basis.

(12) In any one of (1) to (11) above, the content Cc1 of the first carbonaceous material may be 5 mass% or less, 3 mass% or less, or 2 mass% or less.

(13) In any one of (1) to (12) above, the content Cc1 of the first carbonaceous material may be 0.5 mass% or more.

(14) In any one of (1) to (13) above, the first carbonaceous material may contain carbon black.

(15) In any one of (1) to (14) above, the negative electrode material may further contain a second carbonaceous material having a particle size of 32 $\mu$m or more.

(16) In (15) above, the second carbonaceous material may contain graphite.

(17) In (15) or (16) above, the proportion of the first carbonaceous material (carbon black or the like) in the whole carbonaceous material (the total amount of the first carbonaceous material and the second carbonaceous material) may be 50 mass% or more, 75 mass% or more, 80 mass% or more, or 90 mass% or more.

(18) In any one of (15) to (17) above, the proportion of the first carbonaceous material (carbon black or the like) in the whole carbonaceous material (the total amount of the first carbonaceous material and the second carbonaceous material) may be 100 mass% or less, or 95 mass% or less.

(19) In any one of (1) to (18) above, the specific surface area Sc of the first carbonaceous material may be 20 m$^2$/g or more, 25 m$^2$/g or more, or 28 m$^2$/g or more.

(20) In any one of (1) to (19) above, the specific surface area Sc of the first carbonaceous material may be 1500 m$^2$/g or less, 1300 m$^2$/g or less, 800 m$^2$/g or less, 200 m$^2$/g or less, or 150 m$^2$/g or less.

(21) In any one of (1) to (20) above, the first fatty acid may have 9 or more carbon atoms.

(22) In any one of (1) to (21) above, the first fatty acid may have 24 or less, or 20 or less carbon atoms.

EP 4 726 804 A1

(23) In any one of (1) to (22) above, the first fatty acid may include a carbon-carbon unsaturated bond.

(24) In (23) above, the number of carbon-carbon unsaturated bonds included in the first fatty acid may be 6 or less, 4 or less, or 2 or less.

(25) In (23) or (24) above, the number of carbon-carbon unsaturated bonds included in the first fatty acid may be 1 or more.

(26) In any one of (1) to (25) above, the specific surface area Sn of the negative electrode material may be 0.3 $m^2$/g or more, 0.5 $m^2$/g or more, or 0.8 $m^2$/g or more.

(27) In any one of (1) to (26) above, the specific surface area Sn of the negative electrode material may be 4 $m^2$/g or less, 2.7 $m^2$/g or less, 2.5 $m^2$/g or less, 1 $m^2$/g or less, or 0.88 $m^2$/g or less.

(28) In any one of (1) to (27) above, the negative electrode material may contain an organic expander.

(29) In (28) above, the negative electrode material may have a content of the organic expander of 0.01 mass% or more.

(30) In (28) or (29) above, the content of the organic expander in the negative electrode material may be 1 mass% or less, or 0.5 mass% or less.

(31) In any one of (1) to (30) above, the negative electrode material may contain barium sulfate.

(32) In (31) above, the negative electrode material may have a content of the barium sulfate of 0.05 mass% or more or 0.1 mass% or more.

(33) In (31) or (32) above, the content of the barium sulfate in the negative electrode material may be 3 mass% or less.

(34) In any one of (1) to (33) above, the negative electrode material may contain a second fatty acid other than the first fatty acid.

(35) In (34) above, the second fatty acid may contain at least one selected from the group consisting of fatty acids having 7 or less carbon atoms and fatty acids having more than 30 carbon atoms.

(36) In (34) or (35) above, the negative electrode material may have a content of the second fatty acid of 10 ppm or less or 5 ppm or less.

(37) In any one of (1) to (36) above, the electrolyte solution in the lead-acid battery in a full charge state may have a density of 1.20 $g/cm^3$ or more or 1.25 $g/cm^3$ or more at 20°C.

(38) In any one of (1) to (37) above, the density of the electrolyte solution in the lead-acid battery in the full charge state may be 1.35 $g/cm^3$ or less, or 1.32 $g/cm^3$ or less at 20°C.

Fig. 1 shows an appearance of an example of a lead-acid battery according to one embodiment of the present invention.

A lead-acid battery 1 includes a container 12 that houses an element 11 and an electrolyte solution (not illustrated). The inside of the container 12 is partitioned into a plurality of cell chambers 14 by partitions 13. Each cell chamber 14 accommodates one element 11. An opening of the container 12 is closed by a lid 15 including a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging a gas generated in the cell chamber 14 to the outside of the battery.

The element 11 includes a plurality of negative electrode plates 2 and a plurality of positive electrode plates 3 that are stacked with a separator 4 interposed therebetween. Here, the bag-shaped separator 4 housing the negative electrode plate 2 is shown, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to a negative electrode shelf 6, and a penetrating connection body 8 is connected to a positive electrode shelf 5. The negative pole 9 is connected to the negative electrode terminal 16 outside the lid 15. Each penetrating connection body 8 passes through a through-hole provided in the partition 13 to connect the elements 11 in the adjacent cell chambers 14 in series.

The positive electrode shelf 5 is shaped by welding lugs provided on the upper parts of the positive electrode plates 3 to each other. The negative electrode shelf 6 is also shaped by welding lugs provided on the upper parts of the negative electrode plates 2 to each other.

The lid 15 of the lead-acid battery has a single structure (single lid), but is not limited to the illustrated example. The lid 15 may have, for example, a double structure including an inner lid and an outer lid (or an upper lid). The lid having a double structure may have a reflux structure between the inner lid and the outer lid in order to return the electrolyte solution into the battery (inside the inner lid) through a reflux port provided in the inner lid.

EXAMPLES

Hereinafter, the present invention will be specifically described on the basis of examples and comparative examples, but the present invention is not limited to only the following examples.

<<Lead-Acid Batteries E1 to E14, C1 to C5, and R1>>

(1) Preparation of Lead-Acid Battery

(a) Preparation of Negative Electrode Plate

A lead powder as a raw material, a carbonaceous material, a fatty acid or another additive shown in Table 2 or 3, an organic expander (sodium ligninsulfonate), and barium sulfate were mixed with an appropriate amount of a sulfuric acid aqueous solution to obtain a negative electrode paste. At this time, the components were mixed so that the value of the content Cc of the carbonaceous material and the value of the content Cf of the fatty acid in the negative electrode material, each of which was determined with the above-described procedure, were as shown in Table 2 or 3. These components were mixed so that the content of the organic expander was 0.1 mass% and the content of barium sulfate was 0.4 mass%. Polypropylene glycol (PPG) as another additive was blended so that the content in the dry solid content of the mixture was 20 ppm as shown in Table 2 or 3. Meshes of an expanded grid made of a Pb-Ca-Sn alloy were filled with the negative electrode paste, and the negative electrode paste was cured and dried to obtain an unformed negative electrode plate. As the carbonaceous material, carbon black was used in which the value of the specific surface area Sc and the value of the DBP oil absorption Y determined with the above-described procedures were as shown in Table 2 or 3.

(b) Preparation of Positive Electrode Plate

A lead powder as a raw material was mixed with a sulfuric acid aqueous solution to obtain a positive electrode paste. Meshes of an expanded grid made of a Pb-Ca-Sn alloy were filled with the positive electrode paste, and the positive electrode paste was cured and dried to obtain an unformed positive electrode plate.

(c) Preparation of Test Battery

A test battery has a rated voltage of 2 V and a rated 5-hour rate capacity of 32 Ah. The test battery included an element including seven positive electrode plates and seven negative electrode plates. Each negative electrode plate was housed in a bag-shaped separator shaped with a polyethylene microporous membrane, and the negative electrode plates and the positive electrode plates were alternately stacked to shape an element. The element was housed in a polypropylene container together with an electrolyte solution (sulfuric acid aqueous solution), and formed in a container to prepare a flooded-type lead-acid battery. The lead-acid battery was brought into a substantially full charge state by the formation. The electrolyte solution in the lead-acid battery in the full charge state had a density of 1.28 g/cm$^3$ at 20°C.

(2) Evaluation

The prepared lead-acid battery (test battery) was used for the following evaluations (a) to (d).

(a) Outflow of Carbonaceous Material to Electrolyte Solution

The degree of outflow of the carbonaceous material to the electrolyte solution (the concentration of the carbonaceous material in the electrolyte solution) was determined with the above-described procedure. In a case where the concentration of the carbonaceous material in the electrolyte solution was 3 ppm or less on a mass basis, it was determined that a high effect of suppressing outflow of the carbonaceous material was obtained.

(b) Charge Acceptability

The charge acceptability of the test battery was evaluated with the above-described procedure. The charge acceptability of the test battery of each example was expressed as the ratio (%) to 100% of the integrated electric quantity for 10 seconds of the test battery of Comparative Example 1.

(c) Amount of Overcharge

The amount of overcharge of the test battery was evaluated with the above-described procedure. The amount of overcharge of the test battery of each example was expressed as the ratio (%) to 100% of the integrated value of the amount of overcharge of the test battery of Comparative Example 1.

(d) Specific Surface Area Sn of Negative Electrode Material

The specific surface area Sn was calculated with the above-described procedure using the negative electrode material collected from the negative electrode plate taken out from the test battery.

(e) PSOC Life Performance

The PSOC life performance was evaluated for the test batteries of E1, E13, and E14 with the above-described procedure. The PSOC life performance of each test battery was evaluated using the relative value of the number of cycles with respect to that of E1 converted to 100. The larger this value is, the more excellent the PSOC life performance is.

Tables 2 and 3 show the results. These tables show the values of the ratio Cf/Sn and the ratio Cf/Y together. E1 to E14 are examples, C1 to C5 are comparative examples, and R1 is a reference example.

[Table 2]

| Battery No. | First carbonaceous material | | | Fatty acid or another additive | | | Specific surface area Sn of negative electrode material (m²/g) | Cf/Sn ratio (ppm·by mass·m⁻²·g) | Cf/Y ratio (ppm·by mass·mL⁻¹·100 g) | Outflow of first carbonaceous material (ppm by mass) | Amount of overcharge (%) | Charge acceptability (%) |
| | Specific surface area Sc (m²/g) | DBP oil absorption Y (mL/100g) | Content Cc1 (mass%) | Kind | Number of carbon atoms | Content (ppm by mass) | | | | | | |
|---|---|---|---|---|---|---|---|---|---|---|---|---|
| R1 | 745 | 360 | 0.3 | - | - | 0 | 2.50 | 0 | 0 | <1 | 85 | 90 |
| C1 | 69 | 193 | 0.5 | - | - | 0 | 0.88 | 0 | 0 | 6 | 100 | 100 |
| E1 | 28 | 65 | 0.5 | Oleic acid | 18 | 20 | 0.65 | 31 | 0.31 | 1 | 78 | 90 |
| E2 | 28 | 65 | 0.5 | Oleic acid | 18 | 600 | 0.65 | 923 | 9.23 | 1 | 65 | 68 |
| E3 | 69 | 193 | 0.5 | Oleic acid | 18 | 20 | 0.88 | 23 | 0.10 | 1 | 87 | 93 |
| E4 | 69 | 193 | 0.5 | Oleic acid | 18 | 50 | 0.88 | 57 | 0.26 | 2 | 60 | 85 |
| E5 | 69 | 193 | 2.0 | Oleic acid | 18 | 20 | 0.92 | 22 | 0.10 | 3 | 90 | 96 |
| E6 | 69 | 193 | 0.5 | Oleic acid | 18 | 600 | 0.66 | 909 | 3.11 | 1 | 60 | 75 |
| E7 | 745 | 360 | 0.5 | Oleic acid | 18 | 50 | 2.50 | 20 | 0.14 | 3 | 72 | 88 |
| E8 | 745 | 360 | 0.5 | Oleic acid | 18 | 600 | 2.50 | 240 | 1.67 | 1 | 60 | 75 |
| E9 | 1270 | 495 | 0.5 | Oleic acid | 18 | 60 | 2.70 | 22 | 0.12 | 3 | 75 | 90 |
| E10 | 1270 | 495 | 0.5 | Oleic acid | 18 | 600 | 2.70 | 222 | 1.21 | 3 | 65 | 78 |
| E11 | 69 | 193 | 0.5 | Arachidic acid | 20 | 50 | 0.88 | 57 | 0.26 | 2 | 60 | 82 |
| E12 | 69 | 193 | 0.5 | Pelargonic acid | 9 | 50 | 0.88 | 57 | 0.26 | 2 | 80 | 90 |
| C2 | 69 | 193 | 0.5 | Heptanoic acid | 7 | 50 | 0.88 | 57 | 0.26 | 6 | 95 | 98 |
| C3 | 69 | 193 | 0.5 | Butyric acid | 4 | 50 | 0.88 | 57 | 0.26 | 6 | 100 | 98 |
| C4 | 745 | 360 | 0.5 | Oleic acid | 18 | 10 | 0.88 | 11 | 0.03 | 6 | 98 | 95 |
| C5 | 69 | 193 | 0.5 | PPG | - | (20) | 0.65 | (31) | (0.10) | 6 | 85 | 88 |

PPG: Polypropylene glycol

As shown in Table 2, in a case where the content Cc1 of the first carbonaceous material in the negative electrode material was 0.4 mass% or less, almost no outflow of the first carbonaceous material to the electrolyte solution was observed, and almost no turbidity of the electrolyte solution was observed (R1). However, in a case where the content Cc1 of the first carbonaceous material was more than 0.4 mass%, the outflow of the electrolyte solution of the first carbonaceous material became remarkable at 6 ppm (C1). The first carbonaceous materials in R1 and C1 have different specific surface areas Sc and different DBP oil absorptions Y. However, in C4 using the first carbonaceous material exhibiting the same specific surface area Sc and the same DBP oil absorption Y as R1, the outflow of the first carbonaceous material was remarkable. From this, it can be said that in the lead-acid battery using the electrolyte solution not containing the first fatty acid, the outflow of the first carbonaceous material does not depend on the specific surface area Sc and the DBP oil absorption Y of the first carbonaceous material. Furthermore, it can be said that in a case where the content Cc1 of the first carbonaceous material is 0.4 mass% or more, a problem arises that the outflow of the first carbonaceous material becomes remarkable (from comparison of R1 with C1 and C4).

In a case where the ratio Cf/Sn was less than 20 ppm $\cdot$m$^{-2}$ $\cdot$g or the ratio Cf/Y was less than 0.1 ppm $\cdot$mL$^{-1}$ $\cdot$100 g, almost no effect of suppressing outflow of the first carbonaceous material to the electrolyte solution was obtained even when the first fatty acid was used (C4).

Even in a case where the ratio Cf/Sn was 20 ppm $\cdot$m$^{2}$ $\cdot$g or more or the ratio Cf/Y was 0.1 ppm $\cdot$mL$^{-1}$ $\cdot$100 g or more, almost no effect of suppressing outflow of the first carbonaceous material to the electrolyte solution was obtained in a case where the fatty acid had less than 8 carbon atoms (C2 and C3). Furthermore, in a case where PPG was used instead of a fatty acid, almost no effect of suppressing outflow of the first carbonaceous material to the electrolyte solution was obtained (C5).

Meanwhile, in E1 to E12, reduction of the outflow of the first carbonaceous material to 3 ppm or less was achieved. Furthermore, suppression of the amount of overcharge to a low level was achieved while ensuring a relatively high charge acceptability. This is because the first fatty acid was used and Cf/Sn $\geq$ 20 ppm $\cdot$m$^{-2}$ $\cdot$g or Cf/Y $\geq$ 0.1 ppm $\cdot$mL$^{-1}$ $\cdot$100 g was satisfied.

For example, in E3, a higher effect of suppressing outflow of the first carbonaceous material was obtained than in C5 in which PPG was used, and a higher charge acceptability was ensured than in C5 while the amount of overcharge was at the same level as in C5. From the viewpoint of further reducing the amount of overcharge, the ratio Cf/Y is preferably 0.12 ppm $\cdot$ml$^{-1}$ $\cdot$100 g or more (from comparison of E9 with E3 and E5).

[Table 3]

| Battery No. | First carbonaceous material | | | Second carbonaceous material | Fatty acid | | | Specific surface area Sn of negative electrode material (m²/g) | Cf/Sn ratio (ppm ·by mass m⁻²·g) | Cf/Y ratio (ppm ·by mass mL⁻¹ ·100 g) | Outflow of first carbonaceous material (ppm by mass) | Amount of overcharge (%) | Charge acceptability (%) | PSOC life performance (%) |
|---|---|---|---|---|---|---|---|---|---|---|---|---|---|---|
| | Specific surface area Sc (m²/g) | DBP oil absorption Y (mL/100g) | Content Cc1 (mass%) | Content Cc2 (mass%) | Kind | Number of carbon atoms | Content Cf (ppm by mass) | | | | | | | |
| E1 | 28 | 65 | 0.5 | 0 | Oleic acid | 18 | 20 | 0.65 | 31 | 0.31 | 1 | 78 | 90 | 100 |
| E13 | 28 | 65 | 0.5 | 0.05 | Oleic acid | 18 | 20 | 0.67 | 30 | 0.31 | 1 | 78 | 92 | 115 |
| E14 | 28 | 65 | 0.5 | 0.1 | Oleic acid | 18 | 20 | 0.68 | 29 | 0.31 | 1 | 79 | 95 | 131 |

As shown in Table 3, in a case where the first carbonaceous material and the second carbonaceous material were used in combination, more excellent PSOC life performance was obtained than in E1 in which only the first carbonaceous material was used as the carbonaceous material (see E13 and E14). Furthermore, in E13 and E14, the amount of overcharge was suppressed to the same low level as in E1, and a higher charge acceptability was obtained than in E1.

While the present invention has been described with respect to presently preferred embodiments, such disclosure should not be construed in a limiting manner. Various modifications and alterations will undoubtedly become apparent to those skilled in the art to which the present invention belongs upon reading the above disclosure. Accordingly, the appended claims should be construed to encompass all modifications and alterations without departing from the true spirit and scope of the present invention.

INDUSTRIAL APPLICABILITY

The lead-acid batteries according to the first aspect and the second aspect of the present invention are suitable, for example, for applications including charge and discharge in a PSOC. Examples of such an application include a power source for an application in which charge and discharge are controlled in a PSOC. Examples of the application in which charge and discharge are controlled in a PSOC include IS vehicles using a lead-acid battery for IS, charge control applications, and vehicle auxiliary applications. The IS vehicles refer to vehicles under IS control, and include an idling stop system (idle reduction system). The idling stop system may generally be referred to as ISS. The lead-acid battery can be suitably used, for example, as a power source for starting a vehicle (such as an automobile or a motorcycle), a power source for a vehicle auxiliary, and an industrial energy storage apparatus (for example, a power source of an electric vehicle (such as a forklift) or the like). These are merely illustrative, and the application of the lead-acid battery is not limited thereto.

DESCRIPTION OF REFERENCE SIGNS

1: Lead-acid battery
2: Negative electrode plate
3: Positive electrode plate
4: Separator
5: Positive electrode shelf
6: Negative electrode shelf
7: Positive pole
8: Penetrating connection body
9: Negative pole
11: Element
12: Container
13: Partition
14: Cell chamber
15: Lid
16: Negative electrode terminal
17: Positive electrode terminal
18: Vent plug

**Claims**

**1.** A lead-acid battery comprising:

an element; and
an electrolyte solution,
wherein the element includes a positive electrode plate containing a positive electrode material, a negative electrode plate containing a negative electrode material, and a separator interposed between the positive electrode plate and the negative electrode plate,
the negative electrode material contains a first carbonaceous material having a particle size of less than 32 $\mu$m and a fatty acid having 8 or more and 30 or less carbon atoms,
a content Cc1 of the first carbonaceous material in the negative electrode material is 0.4 mass% or more, and

a ratio Cf/Y of a content Cf to a DBP oil absorption Y is 0.1 ppm $\cdot$mL$^{-1}$ $\cdot$100 g or more where Cf (ppm) represents a content of the fatty acid on a mass basis in the negative electrode material and Y represents a dibutyl phthalate (DBP) oil absorption (DBP oil absorption) of the first carbonaceous material.

2. A lead-acid battery comprising:

an element; and
an electrolyte solution,
wherein the element includes a positive electrode plate containing a positive electrode material, a negative electrode plate containing a negative electrode material, and a separator interposed between the positive electrode plate and the negative electrode plate,
the negative electrode material contains a first carbonaceous material having a particle size of less than 32 $\mu$m and a fatty acid having 8 or more and 30 or less carbon atoms,
a content Cc1 of the first carbonaceous material in the negative electrode material is 0.4 mass% or more, and
a ratio Cf/Sn of a content Cf to a specific surface area Sn is 20 ppm $\cdot$m$^{-2}$ $\cdot$g or more wherein Cf (ppm) represents a content of the fatty acid on a mass basis in the negative electrode material and Sn (m$^2$/g) represents a specific surface area of the negative electrode material.

3. The lead-acid battery according to claim 2, wherein Cf/Sn is 1000 ppm $\cdot$m$^{-2}$ $\cdot$g or less.

4. The lead-acid battery according to claim 2, wherein a ratio Cf/Y of the content Cf to a DBP oil absorption Y is 0.1 ppm $\cdot$mL$^{-1}$ $\cdot$100 g or more where Y represents a DBP oil absorption of the first carbonaceous material.

5. The lead-acid battery according to claim 1 or 4, wherein Cf/Y is 12 ppm $\cdot$mL$^{-1}$ $\cdot$100 g or less.

6. The lead-acid battery according to claim 1 or 4, wherein Cf/Y is 0.12 ppm $\cdot$mL$^{-1}$ $\cdot$100 g or more.

7. The lead-acid battery according to any one of claims 1 to 4, wherein the content Cf of the fatty acid on a mass basis is 20 ppm or more and 600 ppm or less.

8. The lead-acid battery according to any one of claims 1 to 4, wherein the content Cc1 of the first carbonaceous material is 2 mass% or less.

9. The lead-acid battery according to any one of claims 1 to 4, wherein the first carbonaceous material contains carbon black.

10. The lead-acid battery according to any one of claims 1 to 4, wherein the negative electrode material further contains a second carbonaceous material having a particle size of 32 $\mu$m or more.

11. The lead-acid battery according to claim 10, wherein the second carbonaceous material contains graphite.

Fig. 1

## INTERNATIONAL SEARCH REPORT

| International application No. |
| --- |
| **PCT/JP2024/030517** |

### A. CLASSIFICATION OF SUBJECT MATTER

*H01M 4/14*(2006.01)i; *H01M 4/62*(2006.01)i; *H01M 10/06*(2006.01)i
FI:  H01M4/14; H01M10/06; H01M4/62

According to International Patent Classification (IPC) or to both national classification and IPC

### B. FIELDS SEARCHED

Minimum documentation searched (classification system followed by classification symbols)

H01M4/00-4/62 ; H01M10/06-10/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2011-65827 A (GS YUASA INTERNATIONAL LTD.) 31 March 2011 (2011-03-31) claims 1-2, paragraphs [0014]-[0017], examples 2-4 | 1-11 |
| A | CN 101877402 A (SOUTH CHINA NORMAL UNIVERSITY) 03 November 2010 (2010-11-03) claims 1-2, paragraphs [0007]-[0008], [0027]-[0028], examples 11-16, table 1 | 1-11 |
| A | JP 2021-099920 A (GS YUASA INTERNATIONAL LTD.) 01 July 2021 (2021-07-01) claims 1, 5, paragraphs [0021]-[0027], [0079]-[0080] | 1-11 |
| A | JP 2019-50229 A (HITACHI CHEMICAL COMPANY, LTD.) 28 March 2019 (2019-03-28) claims 1, 5, 6, paragraphs [0037]-[0038], [0040], [0080]-[0081] | 1-11 |
| P, A | WO 2023/210513 A1 (GS YUASA INTERNATIONAL LTD.) 02 November 2023 (2023-11-02) | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 October 2024** | **26 November 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
**Information on patent family members**

International application No.

**PCT/JP2024/030517**

| Patent document cited in search report | | | Publication date (day/month/year) | Patent family member(s) | | Publication date (day/month/year) |
|---|---|---|---|---|---|---|
| JP | 2011-65827 | A | 31 March 2011 | (Family: none) | | |
| CN | 101877402 | A | 03 November 2010 | (Family: none) | | |
| JP | 2021-099920 | A | 01 July 2021 | (Family: none) | | |
| JP | 2019-50229 | A | 28 March 2019 | WO | 2016/114315 A1 | |
| WO | 2023/210513 | A1 | 02 November 2023 | TW | 202401879 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014050012 A
- JP 10302785 A
- JP 50076535 A